# EUROPÄISCHE PATENTSCHRIFT

(11) **EP 4 308 518 B1**
(45) Veröffentlichungstag und Bekanntmachung des Hinweises auf die Patenterteilung: **15.01.2025**
(21) Anmeldenummer: 22711514.4
(22) Anmeldetag: 04.03.2022
(51) Int. Cl.: C04B 26/16, C08G 18/28, C08G 18/38, C08G 18/78, C08G 18/79, C08L 75/00

(54) **CHEMISCHER DÜBEL AUF ISOCYANAT-AMIN-BASIS MIT VERBESSERTER LEISTUNG UND DESSEN VERWENDUNG**
ISOCYANATE-AMINO-BASED CHEMICAL DOWEL WITH IMPROVED PERFORMANCE AND ITS USE
CHEVILLE CHIMIQUE À BASE D'ISOCYANATE AMINE À PERFORMANCE AMÉLIORÉE ET SON UTILISATION

(30) Priorität: 16.03.2021 EP 21162918
(43) Veröffentlichungstag der Anmeldung: 24.01.2024
(73) Patentinhaber: Hilti Aktiengesellschaft, 9494 Schaan (LI)
(72) Erfinder: PLENK, Christian, 86916 Kaufering (DE); KUMRU, Memet-Emin, 86199 Augsburg (DE); BÜRGEL, Thomas, 86899 Landsberg (DE)
(74) Vertreter: Hilti Aktiengesellschaft Corporate Intellectual Property
(86) Internationale Anmeldenummer: PCT/EP2022/055588
(87) Internationale Veröffentlichungsnummer: WO 2022/194573

(56) Entgegenhaltungen:
- EP-A1- 3 447 078
- US-A1- 2003 105 220

## Beschreibung

Die vorliegende Erfindung betrifft ein Mehrkomponenten-Harzsystem zur Herstellung einer Mörtelmasse auf Basis von Isocyanat-Amin-Addukten zur chemischen Befestigung von Konstruktionselementen. Die Erfindung umfasst ferner eine Mörtelmasse auf Basis von Isocyanat-Amin-Addukten hergestellt aus dem Mehrkomponenten-Harzsystem. Gegenstand der vorliegenden Erfindung ist auch ein Verfahren sowie die Verwendung einer Mörtelmasse auf Basis der Isocyanat-Amin-Addukte zur chemischen Befestigung von Konstruktionselementen in mineralischen Untergründen.

Üblicherweise werden zur Herstellung von Mörtelmassen zur chemischen Befestigung von Konstruktionselementen, wie beispielsweise Ankerstangen, Bewehrungseisen und Schrauben in Bohrlöchern, Bindemittelsysteme auf Basis von radikalisch härtenden Verbindungen wie Methacrylatharzen oder auf Basis von Epoxidharzen, welche mit Aminhärtern umgesetzt werden, verwendet. Es existieren unzählige kommerziell erhältliche Produkte auf Basis dieser Bindemittelsysteme.

Die bekannten Bindemittelsysteme zeigen jedoch gerade unter kritischen äußeren Bedingungen, wie beispielsweise erhöhten Temperaturen, ungereinigten Bohrlöchern, feuchten oder wassergefüllten Bohrlöchern, diamantgebohrten Bohrlöchern, Bohrlöchern in gerissenem Beton etc. ungenügende Eigenschaften.

Neben der Weiterentwicklung und Verbesserung der bestehenden Bindemittelsysteme, bestehen daher auch Bestrebungen, andere als die vorgenannten Bindemittelsysteme in Bezug auf ihre Eignung als Basis für Mörtelmassen zur chemischen Befestigung zu untersuchen. So beschreibt die EP 3 447 078 A1 einen chemischen Dübel, der aus einer Mehrkomponentenmasse hergestellt wird, welcher eine Polyisocyanatkomponente und eine Polyasparaginsäureesterkomponente umfasst. Bei Vermischen der beiden Komponenten entsteht in einer Polyadditionsreaktion Polyharnstoff, welcher das Bindemittel der Mörtelmasse bildet.

Nachteilig an dieser Mörtelmassen ist, dass die verwendeten Polyasparaginsäureester zu einer unzureichenden Vernetzung führen und bei Temperaturen von 80 °C bereits stark erweichen und entsprechend bei hohen Temperaturen wenig Performance zeigen. Darüber hinaus sind die gehärteten Probekörper nicht basenstabil.

Um diese Nachteile zu umgehen, wurde ein Mehrkomponenten-Harzsystem entwickelt, welches ausgehend von der EP 3 447 078 A1 statt des Polyasparaginsäureesters ein Amin mit einer mittleren NH-Funktionalität von 2 oder größer verwendet, wie in der nicht vorveröffentlichten Europäischen Patentanmeldung Nr. 20 164 633.8 beschrieben.

Dieses System liefert jedoch noch nicht die für manche Zwecke bzw. Einsatzbereiche in der chemischen Befestigung erforderlichen hohen Lasten.

Es besteht also weiterhin Bedarf an Mörtelmassen auf der Basis von Isocyanat-Amin-Addukten, die eine höhere Leistungsfähigkeit, das heißt hohe Auszugswerte bzw. Lastwerte, im Vergleich zu den aus der Anmeldung EP 20 164 633.8 bekannten Systemen zeigen.

Aufgabe der vorliegenden Erfindung ist daher eine Mörtelmasse auf Basis von Isocyanat-Amin-Addukten zur Verfügung zu stellen, welche eine verbesserte Auszugsfestigkeit, das heißt höhere Auszugswerte ermöglicht und somit für Befestigungszwecke bei hohen Lasten geeignet ist.

Die der Erfindung zugrundeliegenden Aufgabe wird durch Bereitstellung eines Mehrkomponenten-Harzsystems gemäß Anspruch 1 gelöst. Bevorzugte Ausführungsformen des erfindungsgemäßen Mehrkomponenten-Harzsystems sind in den Unteransprüchen angegeben, welche wahlweise miteinander kombiniert werden können.

Gegenstand der Erfindung ist ferner eine Mörtelmasse zur chemischen Befestigung von Konstruktionselementen gemäß Anspruch 14 hergestellt aus dem erfindungsgemäßen Mehrkomponenten-Harzsystem.

Gegenstand der Erfindung ist auch ein Verfahren zur chemischen Befestigung von Konstruktionselementen in mineralischen Untergründen gemäß Anspruch 15 sowie die Verwendung eines Molekularsiebes in einem Mehrkomponenten-Harzsystem auf Basis von Isocyanat-Amin-Addukten für die chemische Befestigung zur Erhöhung der Auszugswerte eines chemischen Dübels gemäß Anspruch 16 und die Verwendung des erfindungsgemäßen Mehrkomponenten-Harzsystems bzw. der daraus hergestellten Mörtelmasse zur chemischen Befestigung von Konstruktionselementen in mineralischen Untergründen gemäß Anspruch 17.

Ein erster Gegenstand der Erfindung ist ein Mehrkomponenten-Harzsystem enthaltend eine Isocyanatkomponente, die mindestens ein aliphatisches und/oder aromatisches Polyisocyanat mit einer mittleren NCO-Funktionalität von 2 oder größer umfasst, und eine Aminkomponente, die mindestens ein gegenüber Isocyanatgruppen reaktives Amin mit einer mittleren NH-Funktionalität von 2 oder größer umfasst, mit der Maßgabe, dass das Mehrkomponenten-Harzsystem frei von Polyasparaginsäureestern ist, wobei die Isocyanatkomponente und/oder die Aminkomponente mindestens einen Füllstoff sowie mindestens ein Rheologieadditiv umfasst und der Gesamtfüllgrad einer Mörtelmasse, hergestellt durch Vermischen der Isocyanatkomponente und der Aminkomponente, in einem Bereich von 30 bis 80 % liegt, das dadurch gekennzeichnet ist, dass die Isocyanatkomponente und/oder die Aminkomponente ein Molekularsieb enthält.

Es hat sich herausgestellt, dass die Anwesenheit von Polyasparaginsäureester in Isocyanat-Amin-basierten Bindemittelsystemen, welche in Mörtelmassen für die chemische Befestigung verwendet werden, einen negativen Einfluss auf die Temperaturrobustheit der ausgehärteten Mörtelmassen hat. Insbesondere zeigen entsprechende Systeme eine stark verminderte Verbundspannung bei erhöhten Temperaturen, wie beispielsweise 80 °C.

Wesentlich ist ferner, dass das Mehrkomponenten-Harzsystem und insbesondere die Aminkomponente des Mehrkomponenten-Harzsystems frei von Polyasparaginsäureestern ist. Der Ausdruck *"frei von Polyasparaginsäureestern"* im Sinne der vorliegenden Anmeldung bedeutet, dass der Anteil an Polyasparaginsäureestern im Mehrkomponenten-Harzsystem bevorzugt geringer als 2 Gew.-%, weiter bevorzugt geringer als 0,5 Gew.-% und noch weiter bevorzugt geringer als 0,1 Gew.-% ist, jeweils bezogen auf das Gesamtgewicht des Mehrkomponenten-Harzsystems. Die Anwesenheit von Polyasparaginsäureestern in den vorgenannten gewichtsprozentualen Bereichen kann auf potentielle Verunreinigungen zurückgeführt werden. Besonders bevorzugt liegt der Anteil an Polyasparaginsäureestern im Mehrkomponenten-Harzsystem jedoch bei 0,0 Gew.-% bezogen auf das Gesamtgewicht des Mehrkomponenten-Harzsystems.

Zum besseren Verständnis der Erfindung werden die folgenden Erläuterungen der hierin verwendeten Terminologie als sinnvoll erachtet. Im Sinne der Erfindung bedeutet:
- *"Mehrkomponenten-Harzsystem"* ein Reaktionsharzsystem, das mehrere voneinander getrennt gelagerte Komponenten umfasst, im allgemeinen die Harzkomponente und die Härterkomponente, so dass eine Härtung erst nach dem Mischen aller Komponenten erfolgt.
- *"Isocyanate"* sind Verbindungen, die eine funktionelle Isocyanatgruppe -N=C=O aufweisen und durch die Struktureinheit R-N=C=O charakterisiert werden.
- *"Polyisocyanate"* sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.
- *"mittlere NCO-Funktionalität"* beschreibt die Anzahl an Isocyanatgruppen in der Verbindung; bei einer Mischung aus Isocyanaten beschreibt die *"gemittelte NCO-Funktionalität"* die gemittelte Anzahl an Isocyanatgruppen in der Mischung und wird nach der Formel: gemittelte NCO-Funktionalität (Mischung) = Σ mittlere NCO-Funktionalität (Isocyanat i) / nᵢ, also die Summe der mittleren NCO-Funktionalität der Einzelkomponente geteilt durch die Anzahl der Einzelkomponenten, ermittelt.
- *"Isocyanatkomponente"* oder auch A-Komponente, eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst.
- *"Amine"* sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen RNH₂ (primäre Amine) und R₂NH (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)). Von dem Begriff der Amine im Sinne der vorliegenden Erfindungen ist die Verbindungsklasse der Polyasparaginsäureester explizit ausgeschlossen. Diese werden separat unter dem Begriff der Polyasparaginsäureester definiert.
- *"NH-Funktionalität*" beschreibt die Anzahl aktiver Wasserstoffatome, die mit einer Isocyanatgruppe reagieren können, in einer Aminogruppe.
- *"mittlere NH-Funktionalität"* beschreibt die Anzahl aktiver Wasserstoffatome, die mit einer Isocyanatgruppe reagieren können, in einem Amin und ergibt sich aus der Anzahl und NH-Funktionalität der in der Verbindung, dem Amin, enthaltenen Aminogruppen; bei einer Mischung aus Aminen beschreibt die *"gemittelte NH-Funktionalität*" die gemittelte Anzahl an aktiven Wasserstoffatomen in der Mischung und wird nach der Formel: gemittelte NH-Funktionalität (Mischung) = Σ mittlere NH-Funktionalität (Amin i) / nᵢ, also die Summe der mittleren NH-Funktionalität der Einzelkomponente geteilt durch die Anzahl der Einzelkomponenten, ermittelt.
- "*Polyasparaginsäureester*" bezeichnet Verbindungen der allgemeinen Formel: 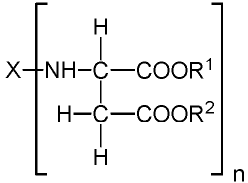 in der
   R¹ und R² gleich oder verschieden sein können und einen organischen Rest bedeuten, der gegenüber Isocyanatgruppen inert ist,
   X einen n-wertigen organischen Rest bedeutet, der gegenüber Isocyanatgruppen inert ist, und
   n eine ganze Zahl von mindestens 2 bedeutet, bevorzugt von 2 bis 6, weiter bevorzugt von 2 bis 4 und besonders bevorzugt 2 bedeutet.
- *"Aminkomponente*" oder auch B-Komponente, eine Komponente des Mehrkomponenten-Harzsystems, welche mindestens ein Amin und ggf. mindestens einen Füllstoff und/oder mindestens ein Rheologieadditiv und/oder weitere Additive umfasst.
- *"Isocyanat-Amin-Addukte*" sind Polymere, die durch Polyadditionsreaktion von Isocyanaten mit Aminen entstehen. Bevorzugt handelt es sich bei den erfindungsgemäßen Isocyanat-Amin-Addukten um Polyharnstoffe, welche mindestens ein Strukturelement der Form -[-NH-R-NH--NH-R'-NH-] aufweisen.
- *"aliphatische Verbindungen"* sind acyclische oder cyclische, gesättigte oder ungesättigte Kohlenstoffverbindungen, ausgenommen aromatische Verbindungen.
- *"alicyclische Verbindungen"* sind Verbindungen mit einer carbocyclischen Ringstruktur, ausgenommen Benzolderivate oder andere aromatische Systeme.
- *"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist.
- *"aromatische Verbindungen"* sind Verbindungen, die der Hückel (4n+2)-Regel folgen.
- *"zweikomponentiges Reaktionsharzsystem"* bedeutet ein Reaktionsharzsystem, das zwei voneinander getrennt gelagerte Komponenten, im vorliegenden Fall eine Isocyanatkomponente und eine Aminkomponente, umfasst, so dass eine Härtung erst nach dem Mischen der beiden Komponenten erfolgt.
- *"Mörtelmasse"* bezeichnet die Zusammensetzung, die durch Mischen der Isocyanatkomponente und der Aminkomponente erhalten wird und als solches direkt zur chemischen Befestigung verwendet werden kann.
- *"Füllstoff"* bezeichnet eine organische oder anorganische, insbesondere anorganische Verbindung.
- *"Rheologieadditiv"* bezeichnet Additive, welche in der Lage sind, das Viskositätsverhalten der Isocyanatkomponente, der Aminkomponente und des Mehrkomponenten-Harzsystems bei der Lagerung, der Applikation und/oder bei der Aushärtung zu beeinflussen. Das Rheologieadditiv verhindert u.a. eine Sedimentation der Füllstoffe in der Polyisocyanatkomponente und/oder der Aminkomponente. Ferner verbessert es die Mischbarkeit der Komponenten und verhindert eine mögliche Phasenseparation.
- *"Temperaturrobustheit"* bezeichnet die Änderung der Verbundspannung einer ausgehärteten Mörtelmasse bei einer erhöhten Temperatur im Vergleich zur Referenzverbundspannung. Im Rahmen der vorliegenden Erfindung wird die Temperaturrobustheit insbesondere als das Verhältnis der Verbundspannung bei 80 °C zur Referenzverspannung angegeben.
- "*ein*", "*eine*", "*einer*" als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.
- "*mindestens ein*", "*mindestens eine*", "*mindestens einer*" zahlenmäßig "ein oder mehrere"; in einer bevorzugten Ausführungsform ist mit diesem Begriff zahlenmäßig "ein", "eine", "einer" gemeint.
- "*enthalten*", "*umfassen*" und "*beinhalten*", dass neben den genannten Bestandteilen noch weitere vorhanden sein können; diese Begriffe sind einschließlich gemeint und umfassen daher auch "*bestehen aus*"; "*bestehen aus*" ist abschließend gemeint und bedeutet, dass keine weiteren Bestandteile vorhanden sein können; in einer bevorzugten Ausführungsform bedeuten die Begriffe "*enthalten*", "*umfassen*" und "*beinhalten*" den Begriff "*bestehen aus*"*.*

Alle in diesem Text genannten Normen (z.B. DIN-Normen) wurden in der zum Anmeldetag dieser Anmeldung aktuellen Ausgabe verwendet.

### Isocyanatverbindungen

Das erfindungsgemäße Mehrkomponenten-Harzsystem umfasst mindestens eine Isocyanatkomponente und mindestens eine Aminkomponente. Die Isocyanatkomponente und die Aminkomponente liegen vor der Anwendung reaktionsinhibierend getrennt voneinander vor.

Die Isocyanatkomponente umfasst mindestens ein Polyisocyanat. Als Polyisocyanat können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden. Die mittlere NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocanate sind solche mit aromatisch gebundenen Isocyanatgruppen, wie Diisocyanatobenzole, Toluoldiisocyanate, Diphenyldiisocyanate, Diphenylmethandiisocyanate, Diisocyanatonaphthaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 1,3-Phenylendiisocyanat, 1,4-Phenylendiisocyanat, 2,4-Toluylendiisocyanat, 2,5-Toluylendiisocyanat 2,6-Toluylendiisocyanat, 1,3-Xylylendiisocyanat, 1,4-Xylylendiisocyanat Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, Xylylendiisocyanat, 1,5-Naphthylendiisocyanat, 3,3'-Dimethyl-4,4'-biphenyldiisocyanat, 3,3'-Dimethoxy-4,4'-biphenyldiisocyanat, 3,3'-Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat.

Bevorzugt werden aliphatische Isocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI) oder 3(4)-Isocyanatomethyl-1-methyl-cyclohexylisocyanat (IMCI), Octagydro-4,7-methano-1H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Besonders bevorzugte Isocyanate sind Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(iso- cyanatocyclohexyl)methan (H₁₂MDI) oder Gemische dieser Isocyanate.

Noch weiter bevorzugt liegen die Polyisocyanate als Präpolymere, Biurete, Isocyanurate, Iminooxadiazindione, Uretdione und/oder Allophanate vor, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Isocyanate sind Desmodur^{®} N 3900, Desmodur^{®} N 100, Desmodur^{®} Ultra N 3200, Desmodur^{®} Ultra N 3300, Desmodur^{®} Ultra N 3600, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 30600, Desmodur^{®} E 2863 XPDesmodur^{®} H, Desmodur^{®} VKS 20 F, Desmodur^{®} 44V20I, Desmodur^{®} 44P01, Desmodur^{®} 44V70 L, Desmodur^{®} N3400, Desmodur^{®} N3500 (jeweils erhältlich von Covestro AG), Tolonate^{™} HDB, Tolonate^{™} HDB-LV, Tolonate^{™} HDT, Tolonate^{™} HDT-LV, Tolonate^{™} HDT-LV2 (erhältlich von Vencorex), Basonat^{®} HB 100, Basonat^{®} HI 100, Basonat^{®} HI 2000 NG (erhältlich von BASF), Takenate^{®} 500, Takenate^{®} 600, Takenate^{®} D-132N(NS), Stabio^{®} D-376N (jeweils erhältlich von Mitsui), Duranate^{®} 24A-100, Duranate^{®} TPA-100, Duranate^{®} TPH-100 (jeweils erhältlich von Asahi Kasai), Coronate^{®} HXR, Coronate^{®} HXLV, Coronate^{®} HX, Coronate^{®} HK, (jeweils erhältlich von Tosoh).

Eines oder mehrere Polyisocyanate sind vorzugsweise in einem Anteil von 20 bis 100 Gew.-%, bevorzugt in einem Anteil von 30 bis 90 Gew.-% und noch bevorzugter in einem Anteil von 35 bis 65 Gew.-%, bezogen auf das Gesamtgewicht der Isocyanatkomponente, in der Isocyanatkomponente enthalten.

### Aminverbindungen

Die Aminkomponente, welche im Mehrkomponenten-Harzsystem reaktionsinhibierend getrennt von der Isocyanatkomponente vorliegt, umfasst mindestens ein gegenüber Isocyanatgruppen reaktives Amin, das eine Aminogruppe, bevorzugt wenigstens zwei Aminogruppen als funktionelle Gruppen umfasst. Erfindungsgemäß weist das Amin eine mittlere NH-Funktionalität von 2 oder größer auf. Die mittlere NH-Funktionalität gibt die Anzahl der an ein Stickstoffatom gebundene Wasserstoffatome in dem Amin an. Demnach weist bspw. ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindung enthaltenen Aminogruppe(n) handelt. Die Aminogruppen können dabei primäre oder sekundäre Aminogruppen sein. Das Amin kann entweder nur primäre oder nur sekundäre Aminogruppen, oder sowohl primäre als auch sekundäre Aminogruppen enthalten.

Gemäß einer bevorzugten Ausführungsform ist das gegenüber Isocyanat-Gruppen reaktive Amin aus der aus aliphatischen, alicyclischen, araliphatischen und aromatischen Aminen bestehenden Gruppe ausgewählt, besonders bevorzugt aus der aus alicyclischen und aromatischen Aminen bestehenden Gruppe ausgewählt.

Gegenüber Isocyanatgruppen reaktive Amine sind dem Fachmann grundsätzlich bekannt. Beispiele für gegenüber Isocyanatgruppen reaktive geeignete Amin sind im Folgenden angegeben, ohne jedoch den Umfang der Erfindung einzuschränken. Diese können sowohl einzeln als auch in beliebigen Mischungen untereinander verwendet werden. Beispiele sind: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 4,4'-Diaminodiphenylsulfon (44Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0^{2,6}]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Besonders bevorzugte Amine sind Diethylmethylbenzoldiamin (DETDA), 2,4-Diamino-3,5-dimethylthiotoluol (Dimethylthio-toluoldiamin, DMTDA), 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure^{®} 300), 4,4'-Methylenbis(2,6-diethylanilin), 4,4'-Methylenbis(N-sec-butylcyclohexanamin) (Clearlink^{®} 1000), 3,3'-Diaminodiphenylsulfon (33Dapson), 4,4'-Diaminodiphenylsulfon (44Dapson), N,N'-Di-sec-butyl-p-phenylenediamin und 2,4,6-Trimethyl-m-phenylenediamin, 4,4'-methylenebis(N-(1-methylpropyl)-3,3'-dimethylcyclohexanamine (Clearlink^{®} 3000), das Reaktionsprodukt von 2-Propenenitril mit 3-Amino-1,5,5-trimethylcyclohexanmethanamin (Jefflink^{®} 745) und 3-((3-(((2-Cyanoethyl)amino)methyl)-3,5,5-trimethylcyclohexyl)amino)propiononitrile (Jefflink^{®} 136 oder Baxxodur^{®} PC136).

Ganz besonders bevorzugte Amine sind 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure^{®} 300), 4,4'-Methylenbis(2,6-diethylanilin), 4,4'-Methylenebis(N-sec-butylcyclohexanamin) (Clearlink^{®} 1000), 3,3'-Diaminodiphenylsulfon (33Dapson), N,N'-Di-sec-butyl-p-phenylenediamin und 2,4,6-Trimethyl-m-phenylenediamin.

Eines oder mehrere Amine sind vorzugsweise in einem Anteil von 20 bis 100 Gew.-%, bevorzugt in einem Anteil von 30 bis 70 Gew.-% und noch bevorzugter in einem Anteil von 35 bis 70 Gew.-% bezogen auf das Gesamtgewicht der Aminkomponente in der Aminkomponente enthalten.

Die Mengenverhältnisse des Polyisocyanats und des Amins des Mehrkomponenten-Harzsystems werden bevorzugt so gewählt, dass das Verhältnis von mittlerer NCO-Funktionalität des Polyisocyanats zu mittlerer NH-Funktionalität des Amins zwischen 0,3 und 2,0 liegt, bevorzugt zwischen 0,5 und 1,8, weiter bevorzugt zwischen 0,5 und 1,5, noch weiter bevorzugt zwischen 0,7 und 1,5 und am stärksten bevorzugt 0,7 bis 1,3.

Zur Einstellung der Geschwindigkeit der Aushärtung kann eine Mischung unterschiedlicher Polyisocyanate und/oder unterschiedlicher Amine verwendet werden. In diesem Fall werden deren Mengenverhältnisse so gewählt, dass das Verhältnis der gemittelten NCO-Funktionalität der Isocyanatmischung zu der gemittelten NH-Funktionalität der Aminmischung zwischen 0,3 und 2,0 liegt, bevorzugt zwischen 0,5 und 1,8, weiter bevorzugt zwischen 0,5 und 1,5, stärker bevorzugt zwischen 0,7 und 1,5 und am stärksten bevorzugt zwischen 0,7 und 1,3.

### Füllstoffe und Additive

Erfindungsgemäß enthält das Mehrkomponenten-Harzsystem ein Molekularsieb, insbesondere einen Zeolith als Füllstoff, zur Erhöhung der Leistungsfähigkeit (Auszugswerte) des Mehrkomponenten-Harzsystems.

Die in der vorliegenden Erfindung verwendete Zeolithe können synthetische oder natürliche Zeolithe sein und werden im allgemeinen durch die Zusammensetzung Mⁿ⁺_{x/n} [(AlO₂)⁻ₓ(SiO₂)_{y}]·zH₂O worin N die Ladung von M ist, meist 1 oder 2, und M ein Kation eines Alkali- oder Erdalkalimetalls, insbesondere Na⁺, K⁺, Ca²⁺ und Mg²⁺ ist, charakterisiert.

Als Zeolithe können folgende verwendet werden:
Zeolith A (Na₁₂((AlO₂)₁₂(SiO₂)₁₂) · 27 H₂O; K₁₂((AlO₂)₁₂(SiO₂)₁₂) · 27 H₂O),
Zeolith X (Na₈₆[(AlO₂)₈₆(SiO₂)₁₀₆] · 264 H₂O),
Zeolith Y (Na₅₆[(AlO₂)₅₆(SiO₂)₁₃₆] · 250 H₂O),
Zeolith L (K₉[(AlO₂)₉(SiO₂)₂₇] · 22 H₂O),
Modernit (Na_{8,7}[(AlO₂)_{8,7}(SiO₂)_{39,3}] · 24 H₂O),
Zeolith ZSM 5 (Na_{0,3}H_{3,8}[(AlO₂)_{4,1}(SiO₂)_{91,9}]),
Zeolith ZSM 11 (Na_{0,1}H_{1,7}[(AlO₂)_{1,8}(SiO₂)_{94,2}]). Davon sind Zeolith A, Zeolith X, Zeolith Y und Zeolith ZSM 5 und Zeolith ZSM 11 bevorzugt.

Das Molekularsieb, insbesondere der Zeolith kann als Pulver, Granulat oder als Paste (beispielsweise 48-50% Pulver in Rizinusöl dispergiert) eingesetzt werden.

Der synthetische Zeolith ist bevorzugt ein synthetischer Zeolith umfassend Teilchen mit einer Partikelgröße von bis zu 250 µm, insbesondere 5 µm bis 24 µm. Besonders bevorzugt weist der synthetische Zeolith eine Porengröße von etwa 5 Å bis etwa 10 Å, insbesondere etwa 3 Å bis etwa 4 Å auf.

Die Spezifische Oberfläche (BET) der Zeolithpartikel liegt bevorzugt zwischen 800 m²/g und 1000 m²/g.

Der Restwassergehalt des Zeoliths liegt unter 2,5 % w/w, bevorzugt unter 1,5% w/w, und die Wasserabsorptionskapazität liegt unter 22 - 24% w/w.

Es ist möglich, eine Mischung aus zwei oder mehreren unterschiedlichen Zeolithtypen zu verwenden.

Das Molekularsieb, insbesondere der Zeolith, wird bevorzugt in einer Menge von 0,1 bis 60 Gew.-%, besonders bevorzugt in einer Menge von 1 bis 35 Gew.-% und ganz besonders bevorzugt in einer Menge von 2 bis 5 Gew.-%, bezogen auf das Gesamtgewicht des Mehrkomponenten-Harzsystems, eingesetzt.

Durch die Verwendung des Molekularsiebes konnte die Leistungsfähigkeit (Lastniveau) einer ausgehärteten chemischen Dübelmasse auf Isocyanat-Amin-Basis um 5 bis 10% gesteigert werden, verglichen mit eine Dübelmasse, welche kein Molekularsieb enthält.

Das Molekularsieb kann in einer der beiden Komponenten des Mehrkomponenten-Harzsystems oder in beiden Komponenten enthalten sein.

Das Molekularsieb kann auch als Trocknungsmittel für die Isocyanatkomponente dienen und kann so die Lagerstabilität der Isocyanatkomponente und damit eines Mehrkomponenten-Harzsystems, welches die Isocyanatkomponente umfasst, verbessern.

Wird das Molekularsieb als Trocknungsmittel eingesetzt, so enthält die Isocyanatkomponente das Molekularsieb oder zumindest einen Teil davon, wobei die Mindestmenge, in der das Molekularsieb in der Isocyanatkomponente enthalten ist, 3 Gew.-%, bezogen auf das Gewicht der Isocyanatkomponente, beträgt. Insbesondere ist im Fall einer angestrebten zusätzlichen Erhöhung der Lagerstabilität das Molekularsieb in einer Menge von 3 Gew.-% bis 35 Gew.-%, bevorzugt 3 Gew.-% bis 20 Gew.-%, und besonders bevorzugt 3 Gew.-% bis 5 Gew.-%, jeweils bezogen auf das Gewicht der Isocyanatkomponente, in der Isocyanatkomponente enthalten.

Neben dem Molekularsieb enthält erfindungsgemäß die Isocyanatkomponente und/oder die Aminkomponente mindestens einen Füllstoff und mindestens ein Rheologieadditiv, wobei es erfindungswesentlich ist, dass zumindest eine der beiden Komponenten sowohl einen Füllstoff als auch ein Rheologieadditiv enthält. Es ist bevorzugt, dass sowohl die Isocyanatkomponente als auch die Aminkomponente jeweils mindestens einen Füllstoff als auch mindestens ein Rheologieadditiv enthalten.

Der Gesamtfüllgrad einer Mörtelmasse, einschließlich des Molekularsiebes, hergestellt durch Vermischen der Isocyanatkomponente und der Aminkomponente des Mehrkomponenten-Harzsystems liegt erfindungsgemäß in einem Bereich von 30 bis 80 Gew.-% bezogen auf das Gesamtgewicht der Mörtelmasse, bevorzugt in einem Bereich von 35 bis 65, noch bevorzugter in einem Bereich von 35 bis 60 Gew.-%. Der Gesamtfüllgrad der Mörtelmasse bezieht sich auf den gewichtsprozentualen Anteil an Füllstoff, einschließlich des Molekularsiebes, und Rheologieadditiv bezogen auf das Gesamtgewicht der Isocyanatkomponente und der Aminkomponente. In einer bevorzugten Ausführungsform beträgt der Füllgrad der Isocyanatkomponente bis 80 Gew.-%, bevorzugt 10 bis 70 Gew.-%, weiter bevorzugt 35 bis 65 Gew.-% bezogen auf das Gesamtgewicht der Isocyanatkomponente. Der Füllgrad der Aminkomponente beträgt vorzugsweise bis 80 Gew.-%, bevorzugt 10 bis 70 Gew.-%, weiter bevorzugt 35 bis 65 Gew.-%, jeweils bezogen auf das Gesamtgewicht der Aminkomponente.

Als Füllstoffe dienen bevorzugt anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden. Als Füllstoffe kommen insbesondere nicht oberflächenbehandelte Quarzmehle, Feinquarzmehle und Feinstquarzmehle, wie beispielsweise Millisil^{®} W3, Millisil^{®} W6, Millisil^{®} W8 und Millisil^{®} W12, bevorzugt Millisil^{®} W12, in Frage. Ferner können silanisierte Quarzmehle, Feinquarzmehle und Feinstquarzmehl eingesetzt werden. Diese sind beispielsweils käuflich unter der Produktserie Silbond^{®} der Firma Quarzwerke erhältlich. Hierbei sind die Produktserien Silbond^{®} EST (Epoxysilan-modifiziert) und Silbond^{®} AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, (d50 = 0,3 µm) oder Qualitäten wie DAW oder DAM mit den Typenbezeichnungen 45 (d50 < 0,44 µm), 07 (d50 > 8,4µm), 05 (d50 < 5,5 µm), 03 (d50 < 4,1µm). Weiterhin können die oberflächenbehandelte Fein- und Feinstfüllstoffe vom Typ Aktisil AM (aminosilanbehandelt, d50 = 2,2 µm) und Aktisil EM (epoxysilanbehandelt, d50=2,2 µm) von Hoffman Mineral verwendet werden. Die Füllstoffe können einzeln oder auch in beliebigen Mischung untereinander verwendet werden

Die Einstellung der Fließeigenschaften erfolgt über den Zusatz von Rheologieadditiven, welche erfindungsgemäß in der Isocyanatkomponente und/oder der Aminkomponente verwendet werden Geeignete Rheologieadditive sind: Schichtsilikaten wie Laponite, Bentone oder Montmorillonit, Neuburger Kieselerde, pyrogenen Kieselsäuren, Polysaccharide; Polyacrylat-, Polyurethan- oder Polyharnstoffverdicker sowie Celluloseester. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Der Anteil eines oder mehrerer Rheologieadditive in der Isocyanatkomponente liegt vorzugsweise bei 0,1 bis 3 Gew.-%, bevorzugt bei 0,1 bis 1,5 Gew.-% bezogen auf das Gesamtgewicht der Isocyanatkomponente. Der Anteil eines oder mehrerer Rheologieadditive in der Aminkomponente liegt vorzugsweise bei 0,1 bis 5 Gew.-%, bevorzugt bei 0,5 bis 3 Gew.-% bezogen auf das Gesamtgewicht der Aminkomponente.

In einer Ausführungsform des Mehrkomponenten-Harzsystems enthält die Isocyanatkomponente und/oder die Aminkomponente mindestens ein Silan als Haftvermittler.

Durch den Einsatz eines Silans wird die Vernetzung der Bohrlochwand mit der Mörtelmasse verbessert, so dass sich die Haftung im ausgehärteten Zustand erhöht.

Geeignete Haftvermittler sind aus der Gruppe der Silane ausgewählt, die mindestens eine Si-gebundene hydrolysierbare Gruppe aufweisen. Dabei ist es nicht erforderlich, dass das Silan neben der Si-gebundenen hydrolysierbaren Gruppe eine weitere funktionelle Gruppe aufweist, wie etwa eine Isocyanatgruppe oder eine Aminogruppe. Dennoch kann das Silan neben der Si-gebundenen hydrolysierbaren Gruppe eine oder mehrere gleiche oder unterschiedliche weitere funktionelle(n) Gruppe aufweisen, wie etwa eine Amino-, Mercapto-, Epoxy-, Isocyanato-, Alkenyl-, (Meth)acryloyl-, Anhydrido- oder Vinyl-Gruppe. Die Si-gebundene hydrolysierbare Gruppe ist bevorzugt eine C₁-C₇-Alkoxy-Gruppe und ganz besonders bevorzugt, eine Methoxy- oder Ethoxygruppe.

Geeignete Silane sind aus der Gruppe ausgewählt, die aus 3-Aminopropyltrialkoxysilanen, wie 3-Aminopropyltrimethoxysilan und 3-Aminopropyltriethoxysilan; 3-Glycidyloxypropyltrialkoxysilanen, wie 3-Glycidyloxypropyltrimethoxysilan und 3-Glycidyloxypropyltriethoxysilan; Glycidyloxymethyltrimethoxysilan; 3-Glycidyloxypropylmethyldimethoxysilan; Bis-(3-trialkoxysilylpropyl)aminen, wie Bis-(3-trimethoxysilylpropyl)amin und Bis-(3-triethoxysilylpropyl)amin; 3-Mercaptopropyltrialkoxysilanen, wie 3-Mercaptopropyltrimethoxysilan und 3-Mercaptopropylmethyldimethoxysilan; 3-(Meth)acryloyloxyalkyltrialkoxysilanen, wie 3-(Meth)acryloyloxypropyltrimethoxysilan, 3-(Meth)acryloyloxypropyltriethoxysilan; 3-(Meth)acryloyloxymethyltrimethoxysilan, 3-(Meth)acryloyloxymethyltriethoxysilan und 3-(Meth)acryloyloxypropylmethyldimethoxysilan; Alkenylalkoxysilane, wie Vinylalkoxysilane, z.B. Vinyltrimethoxysilan und Vinyltriethoxysilan; Tetraalkoxysilanen, wie Tetraethoxysilan, Tetramethoxysilan und Tetrapropoxysilan; 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, N-Phenyl-3-aminoethyl-3-aminopropyl-trimethoxysilan und Gemische von zwei oder mehr davon besteht.

Besonders geeignete Silane sind aus der Gruppe ausgewählt, die aus 3-Aminopropyltrialkoxysilanen, 3-Glycidyloxyalkzltrialkoxysilanen, Bis-(3-trialkoxysilylpropyl)aminen, 3-Mercaptopropyltrialkoxysilanen, 3-(Meth)acryloyloxyalkyltrialkoxysilanen, Alkenylalkoxysilanen, Tetraalkoxysilanen und Gemischen von zwei oder mehr davon besteht.

Ganz besonders geeignete Silane sind 3-Glycidoxypropyldimethoxysilan, 3-Glycidoxypropyltrimethoxysilan, 3-Trimethoxysilylpropylmethacrylat und Vinyltrimethoxysilan.

Das Silan kann in einer Menge bis zu 10 Gew.-%, bevorzugt 0,1 bis 5 Gew.-%, weiter bevorzugt 1,0 bis 2,5 Gew.-% bezogen auf das Gesamtgewicht des Mehrkomponenten-Harzsystems in dem Mehrkomponenten-Harzsystem enthalten sein. Dabei kann das Silan vollständig in einer Komponente, also der Isocyanatkomponente oder der Aminkomponente, oder aufgeteilt auf beide Komponenten, also aufgeteilt auf die Isocyanatkomponente und die Aminkomponente enthalten sein.

Ein weiterer Gegenstand ist ferner eine Mörtelmasse, welche durch Vermischen der Isocyanatkomponente und der Aminkomponente des Mehrkomponenten-Harzsystems hergestellt wird.

Das Mehrkomponenten-Harzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Isocyanatkomponente und die Aminkomponente reaktionsinhibierend voneinander getrennt angeordnet sind.

Zur bestimmungsgemäßen Anwendung des Mehrkomponenten-Harzsystems werden die Isocyanatkomponente und die Aminkomponente aus den getrennten Kammern entleert und in einer geeigneten Vorrichtung, beispielsweise einem Statikmischer oder einem Dissolver, gemischt. Die Mischung aus Isocyanatkomponente und Aminkomponente (Mörtelmasse) wird danach mittels einer bekannten Injektionsvorrichtung in das gegebenenfalls zuvor gereinigte Bohrloch eingebracht. Anschließend wird das zu fixierende Befestigungselement in die Mörtelmasse eingesetzt und justiert. Die reaktiven Bestandteile der Isocyanatkomponente reagieren mit den Aminogruppen der Aminkomponente unter Polyaddition, sodass die Mörtelmasse unter Umgebungsbedingungen innerhalb einer gewünschten Zeit, vorzugsweise innerhalb weniger Minuten oder Stunden, aushärtet.

Die erfindungsgemäße Mörtelmasse bzw. das erfindungsgemäße Mehrkomponenten-Harzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Mörtelmassen und die erfindungsgemäßen Mehrkomponenten-Harzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Mörtelmasse oder ein erfindungsgemäßes Mehrkomponenten-Harzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist ferner die Verwendung eines Mehrkomponenten-Harzsystems oder einer erfindungsgemäßen Mörtelmasse zur chemischen Befestigung von Konstruktionselementen in mineralischen Untergründen.

Ein weiterer Gegenstand ist auch die Verwendung eines erfindungsgemäßen Mehrkomponenten-Harzsystems oder einer erfindungsgemäßen Mörtelmasse zur Verbesserung der Auszugskräfte eines chemischen Dübels hergestellt aus einem erfindungsgemäßen Mehrkomponenten-Harzsystem Bohrlöchern. Dies umfasst insbesondere eine Erhöhung der Auszugsfestigkeiten in gut gereinigten Bohrlöcher, wobei gut gereinigt bedeutet, dass die Bohrlöcher wiederholt mit Druckluft ausgeblasen, dann ausgebürstet, um an den Bohrlochwandung anhaftendes Bohrmehl und Bohrklein zu lockern, und anschließend erneute wiederholt mit Druckluft ausgeblasen wurden.

Ein noch weiterer Gegenstand ist die Verwendung eines Molekularsiebes in einem Mehrkomponenten-Harzsystem für die chemische Befestigung zur Erhöhung der Auszugswerte.

Die Erfindung wird im Folgenden anhand von Ausführungsbeispielen weiter beschrieben, was jedoch nicht in einem einschränkenden Sinn verstanden werden soll.

### Ausführungsbeispiele

Zur Herstellung des Vergleichszusammensetzung und der erfindungsgemäßen Zusammensetzung wurden folgende Verbindungen verwendet:

| | | |
|---|---|---|
| Hexamethylen-1,6-diisocyanat Homopolymere | niedrigviskoses, aliphatisches Polyisocyanat-Harz auf Basis Hexamethylendiisocyanat (Equivalentgewicht ca. 179; NCO-Gehalt nach M105-ISO 11909 23,5 ± 0,5 Gew.-%, monomeres HDI nach M106-ISO 10283 < 0,25 %; Viskosität (23°C) M014-ISO 3219/A.3 730 ± 100 mPa·s; Desmodur^{®} N 3900) | Covestro AG |
| Hexamethylen-1,6-diisocyanat Biuret Oligomerisationsprodukt | Desmodur^{®} N 3200 | Covestro AG |
| Mischung aus 6-Methyl-2,4-bis(methylthio)phenylen-1,3-diamin und 2-Methyl-4,6-bis(methylthio)phenylen-1,3-diamin | Ethacure^{®} 300 Curative (Dimethylthiotoluoldiamin 95-97 %, Monomethylthiotoluoldiamin 2- 3 %; Equivalentgewicht mit Isocyanaten 107) | Albermale Corporation |
| Asparaginsäure, N,N'-(methylendi-4,1-cyclohexandiyl)bis-, 1,1',4,4'-tetraethylester | Desmophen^{®} NH 1420 (Aminwert M123-AFAM 2011-06054 199-203 mg KOH/g; Equivalentgewicht etwa 276; Wassergehalt DIN 51777-1 ≤ 0,15 %; Viskosität (25°C) M068-DIN 53019 900-2.000 mPa·s)) | Covestro AG |
| 3-Glycidyloxypropyltrimethoxysilan | Dynasylan^{®} GLYMO | Evonik Resource Efficiency GmbH |
| Zeolithpulver | Purmol^{®} 3ST (synthetischer Kalium-Typ Zeolith mit einer Porengröße von 3Å, einer primären Kristallgröße von 4,6 µm und einer Partikelgröße von 24 µm; Restwasser (550°C, 2h) ≤ 1,5 % w/w; Wasseradsorption (50 %rH, 20°C, 24h) ≥ 22 % w/w) | Zeochem AG |
| Quarzmehl | Millisil^{®} W12 | Quarzwerke Frechen |
| Kieselsäure | Cab-O-Sil^{®} TS-720 | Cabot |

Die Vergleichszusammensetzungen und die erfindungsgemäßen Zusammensetzungen der Isocyanatkomponente und der Aminkomponente sind in den nachfolgenden Tabelle 1 angegeben.

**Tabelle 1: Zusammensetzungen der Isocyanatkomponente und der Aminkomponente [Gew.-%] für die Vergleichsbeispiele 1 bis 3 und die erfindungsgemäßen Beispiele 1 und 2**

| | | **Beispiele (Gewichtsanteile)** | | | |
|---|---|---|---|---|---|
| **Bestandteile** | **Vergleich 1** | **Vergleich 2** | **1** | **Vergleich 3** | **2** |
| **Isocyanatkomponente** | | | | | |
| Hexamethylen-1,6-diisocyanat Hompolymer (N3900) | 24,4 | 25,4 | 24,7 | 24,3 | 23,6 |
| Hexamethylen-1,6-diisocyanat Biuret Oligomerisationsprodukt (N3200) | - | 4,1 | 4,0 | 4,0 | 3,9 |
| 3-Glycidyloxypropyltrimethoxysilan | - | - | - | 2,0 | 2,0 |
| Quarzmehl (W12) | 14,4 | 37,3 | 34,3 | 36,1 | 33,1 |
| Kieselsäure | 0,6 | 1,0 | 1,0 | 1,0 | 1,0 |
| Zeolithpulver | - | - | 2,0 | - | 2,0 |
| | | | | | |

| **Aminkomponente** | | | | | |
|---|---|---|---|---|---|
| 6-Methyl-2,4-bis(methylthio)phenylen-1,3-diamin / 2-Methyl-4,6-bis(methylthio)phenylen-1,3-diamin | | 17,4 | 16,0 | 17,6 | 17,1 |
| Asparaginsäure, N,N'-(methylendi-4,1-cyclohexandiyl)bis-, 1,1',4,4'-tetraethylester | 37,6 | | | | |
| Quarzmehl | 22,1 | 14,3 | 16,7 | 14,5 | 16,9 |
| Kieselsäure | 0,9 | 0,5 | 0,5 | 0,5 | 0,5 |
| | | | | | |
| Volumenverhältnis Isocyanatkomponente : Aminkomponente | | 2:1 | 2:1 | 2:1 | 2:1 |
| Isocyanat:Amin Verhältnis | 1:1 | 1:1 | 1,05:1 | 1:1 | 1,05:1 |
| Verbundspannung [N/mm²] | 26,0 | 27,5 | **30,2** | 30,3 | **33,1** |

Zur Herstellung der Vergleichsmörtelmasse 1 wurden zunächst die Isocyanatkomponente und die Aminkomponente jeweils einzeln hergestellt. Dazu wurden jeweils die in Tabelle 1 angegebenen Bestandteile zusammengegeben und in einem Speedmixer (DAC-600 der Fa. Hauschild) für 30 s bei 1500 U/min gemischt. Anschließend wurden die Isocyanatkomponente und die Aminkomponente miteinander vereinigt und in einem Speedmixer für 30 s bei 1500 U/min gemischt. Die so erhaltene Mörtelmasse wurde in eine Einkomponenten-Hartkartusche gefüllt und mittels eines Auspressgerätes in ein Bohrloch injiziert.

Zur Herstellung der Vergleichsmörtelmasse 2 und der erfindungsgemäßen Mörtelmassen wurden zunächst die Isocyanatkomponenten und die Aminkomponenten jeweils einzeln hergestellt. Dazu wurden die in Tabelle 1 angegebenen Bestandteile zusammengegeben und jeweils in einem Dissolver (Fa. PC Laborsystem GmbH, 8 min; 3500U/min) unter Vakuum (80mbar) zu einer luftblasenfreien pastösen Masse homogenisiert. Anschließend wurden die Isocyanatkomponente und die Aminkomponente miteinander vereinigt und in einem Speedmixer für 30 s bei 1500 U/min gemischt. Die so erhaltenen Mörtelmassen wurden jeweils in eine Hartkartusche gefüllt und mittels eines Auspressgerätes in ein Bohrloch injiziert.

Zur Bestimmung der mit den Mörtelmassen erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der erfindungsgemäßen Zweikomponenten-Mörtelmasse in C20/25 Betonplatten eingedübelt wurde. Zur Bestimmung der Referenzverbundspannung wurde nach einer Aushärtezeit von 24 h bei einer Temperatur von 23°C die Versagenslast durch zentrisches Ausziehen der Ankergewindestange mit enger Abstützung ermittelt. Die mittlere Versagenslast wurde anhand der Ergebnisse von fünf Ankern bestimmt.

Die unter Verwendung der oben beschriebenen Mörtelrezepturen erhaltenen Verbundspannungen sind in der Tabelle 1 aufgelistet.

Sowohl bei den Formulierungen ohne 3-Glycidyloxypropyltrimethoxysilan (Vergleich 1, Beispiel 1) als auch bei den Formulierungen mit 3-Glycidyloxypropyltrimethoxysilan (Vergleich 2, Beispiel 2) sieht man jeweils eine Verbesserung der Verbundspannung um ca. 10% durch Zugabe von 2% Zeolithpulver.

## Patentansprüche

1. Mehrkomponenten-Harzsystem enthaltend eine Isocyanatkomponente, die mindestens ein aliphatisches und/oder aromatisches Polyisocyanat mit einer mittleren NCO-Funktionalität von 2 oder größer umfasst, und eine Aminkomponente, die mindestens ein gegenüber Isocyanatgruppen reaktives Amin mit einer mittleren NH-Funktionalität von 2 oder größer umfasst, mit der Maßgabe, dass das Mehrkomponenten-Harzsystem frei von Polyasparaginsäureestern ist, wobei die Isocyanatkomponente und/oder die Aminkomponente mindestens einen Füllstoff sowie mindestens ein Rheologieadditiv umfasst und der Gesamtfüllgrad einer Mörtelmasse hergestellt durch Vermischen der Isocyanatkomponente und der Aminkomponente in einem Bereich von 30 bis 80 Gew.-% liegt,
**dadurch gekennzeichnet, dass**
die Isocyanatkomponente und/oder die Aminkomponente zusätzlich ein Molekularsieb enthält.

2. Mehrkomponenten-Harzsystem gemäß Anspruch 1, **dadurch gekennzeichnet, dass** das Molekularsieb ein Zeolith ist.

3. Mehrkomponenten-Harzsystem gemäß Anspruch 2, **dadurch gekennzeichnet, dass** der Zeolith aus der Gruppe bestehend aus
Zeolith A (Na₁₂((AlO₂)₁₂(SiO₂)₁₂) · 27 H₂O; K₁₂((AlO₂)₁₂(SiO₂)₁₂) · 27 H₂O),
Zeolith X (Na₈₆[(AlO₂)₈₆(SiO₂)₁₀₆] · 264 H₂O),
Zeolith Y (Na₅₆[(AlO₂)₅₆(SiO₂)₁₃₆] · 250 H₂O),
Zeolith L (K₉[(AlO₂)₉(SiO₂)₂₇] · 22 H₂O),
Modernit (Na_{8,7}[(AlO₂)_{8,7}(SiO₂)_{39,3}] · 24 H₂O),
Zeolith ZSM 5 (Na_{0,3}H_{3,8}[(AlO₂)_{4,1}(SiO₂)_{91,9}]) und
Zeolith ZSM 11 (Na_{0,1}H_{1,7}[(AlO₂)_{1,8}(SiO₂)_{94,2}]) ausgewählt ist.

4. Mehrkomponenten-Harzsystem gemäß einem der vorhergehenden Ansprüche, **dadurch gekennzeichnet, dass** das Molekularsieb als Pulver, Granulat oder als Paste vorliegt.

5. Mehrkomponenten-Harzsystem gemäß einem der vorhergehenden Ansprüche, **dadurch gekennzeichnet, dass** das Molekularsieb in einer Menge von 0,1 bis 60 Gew.-%, bezogen auf das Gesamtgewicht des Mehrkomponenten-Harzsystems, enthalten ist.

6. Mehrkomponenten-Harzsystem gemäß einem der vorhergehenden Ansprüche, **dadurch gekennzeichnet, dass** sowohl die Isocyanatkomponente als auch die Aminkomponente den mindestens einen Füllstoff und das mindestens eine Rheologieadditiv umfassen.

7. Mehrkomponenten-Harzsystem gemäß Anspruch 6, **dadurch gekennzeichnet, dass** der Füllgrad der Isocyanatkomponente und der Füllgrad der Aminkomponente 10 bis 70 Gew.-% beträgt, jeweils bezogen auf das Gesamtgewicht der Isocyanatkomponente bzw. der Aminkomponente.

8. Mehrkomponenten-Harzsystem gemäß einem der vorhergehenden Ansprüche, **dadurch gekennzeichnet, dass** das Polyisocyanat und das Amin in einem Mengenverhältnis vorliegen, bei dem das Verhältnis von mittlerer NCO-Funktionalität des Polyisocyanats zu mittlerer NH-Funktionalität des Amins zwischen 0,3 und 2,0 liegt.

9. Mehrkomponenten-Harzsystem gemäß einem der vorhergehenden Ansprüche, **dadurch gekennzeichnet, dass** die Isocyanatkomponente mindestens ein aromatisches Polyisocyanat ausgewählt aus der Gruppe bestehend aus 1,4-Phenylendiisocyanat, 2,4- und/oder 2,6-Toluylendiisocyanat, Xylylendiisocyanat, hydriertem Xylylendiisocyanat, Tetramethylxylylendiisocyanat, 1,5-Naphthylendiisocyanat, Diphenylenmethan-2,4'- und/oder -4,4'-diisocyanat, Triphenylmethan-4,4',4"-triisocyanat, Bis- und Tris-(isocyanatoalkyl)-benzol, -toluol und -xylol sowie Gemische davon umfasst.

10. Mehrkomponenten-Harzsystem gemäß einem Ansprüche 1 bis 8, **dadurch gekennzeichnet, dass** die Isocyanatkomponente mindestens ein aliphatisches Polyisocyanat ausgewählt aus der Gruppe bestehend aus Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-lsocyanatomethyl-1-methyl-cyclohexylisocyanat (IMCI) und 4,4'-Bis(iso-cyanatocyclohexyl)methan (H₁₂MDI) und Gemische davon umfasst.

11. Mehrkomponenten-Harzsystem gemäß einem der vorhergehenden Ansprüche, **dadurch gekennzeichnet, dass** der Gesamtfüllgrad in einem Bereich von 35 bis 65 Gew.-%, bezogen auf das Gesamtgewicht des Mehrkomponenten-Harzsystems liegt.

12. Mehrkomponenten-Harzsystem gemäß einem der vorhergehenden Ansprüche, **dadurch gekennzeichnet, dass** das gegenüber Isocyanatgruppen reaktive Amin ausgewählt ist aus der Gruppe bestehend aus 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin, 4,4'-Methylenbis(2,6-diethylanilin), 4,4'-Methylenebis(N-sec-butylcyclohexanamin), 3,3'-Diaminodiphenylsulfon, N,N'-Di-sec-butyl-p-phenylenediamin und 2,4,6-Trimethyl-m-phenylenediamin sowie Mischungen davon.

13. Mehrkomponenten-Harzsystem gemäß einem der vorhergehenden Ansprüche, **dadurch gekennzeichnet, dass** das Mehrkomponenten-Harzsystem ein Zweikomponenten-Harzsystem ist.

14. Mörtelmasse hergestellt durch das Vermischen der Isocyanatkomponente und der Aminkomponente des Mehrkomponenten-Harzsystems gemäß einem der vorhergehenden Ansprüche.

15. Verfahren zur chemischen Befestigung von Konstruktionselementen in Bohrlöchern, wobei zur chemischen Befestigung ein Mehrkomponenten-Harzsystem gemäß einem der Ansprüche 1 bis 13 oder eine Mörtelmasse gemäß Anspruch 14 verwendet wird.

16. Verwendung eines Molekularsiebes in einem Mehrkomponenten-Harzsystem auf Basis von Isocyanat-Amin-Addukten für die chemische Befestigung zur Erhöhung der Auszugswerte eines chemischen Dübels.

17. Verwendung eines Mehrkomponenten-Harzsystem gemäß einem der Ansprüche 1 bis 13 oder einer Mörtelmasse gemäß Anspruch 14 zur chemischen Befestigung von Konstruktionselementen in mineralischen Untergründen.

## Claims

1. Multi-component resin system containing an isocyanate component, which comprises at least one aliphatic and/or aromatic polyisocyanate having an average NCO functionality of 2 or more, and an amine component, which comprises at least one amine which is reactive to isocyanate groups and has an average NH functionality of 2 or more, with the proviso that the multi-component resin system is free of polyaspartic acid esters, the isocyanate component and/or the amine component comprising at least one filler and at least one rheology additive and the total filling level of a mortar composition produced by mixing the isocyanate component and the amine component is in a range from 30 to 80 wt.%,
**characterized in that**
the isocyanate component and/or the amine component additionally contains a molecular sieve.

2. Multi-component resin system according to claim 1, **characterized in that** the molecular sieve is a zeolite.

3. Multi-component resin system according to claim 2, **characterized in that** the zeolite is selected from the group consisting of
zeolite A (Na₁₂((AlO₂)₁₂(SiO₂)₁₂) · 27 H₂O; K₁₂((AlO₂)₁₂(SiO₂)₁₂) · 27 H₂O),
zeolite X (Na₈₆[(AlO₂)₈₆(SiO₂)₁₀₆] · 264 H₂O),
zeolite Y (Na₅₆[(AlO₂)₅₆(SiO₂)₁₃₆] · 250 H₂O),
zeolite L (K₉[(AlO₂)₉(SiO₂)₂₇] · 22 H₂O),
mordenite (Na_{8.7}[(AlO₂)_{8.7}(SiO₂)_{39.3}] · 24 H₂O),
zeolite ZSM 5 (Na_{0.3}H_{3.8}[(AlO₂)_{4.1}(SiO₂)_{91.9}]) and
zeolite ZSM 11 (Na_{0.1}H_{1.7}[(AlO₂)_{1.8}(SiO₂)_{94.2}]).

4. Multi-component resin system according to any of the preceding claims, **characterized in that** the molecular sieve is present as a powder, granular material or paste.

5. Multi-component resin system according to any of the preceding claims, **characterized in that** the molecular sieve is contained in an amount of 0.1 to 60 wt.%, based on the total weight of the multi-component resin system.

6. Multi-component resin system according to any of the preceding claims, **characterized in that** both the isocyanate component and the amine component comprise the at least one filler and the at least one rheology additive.

7. Multi-component resin system according to claim 6, **characterized in that** the filling level of the isocyanate component and the filling level of the amine component is from 10 to 70 wt.%, based in each case on the total weight of the isocyanate component and the amine component, respectively.

8. Multi-component resin system according to any of the preceding claims, **characterized in that** the polyisocyanate and the amine are present in a quantity ratio in which the ratio of the average NCO functionality of the polyisocyanate to the average NH functionality of the amine is between 0.3 and 2.0.

9. Multi-component resin system according to any of the preceding claims, **characterized in that** the isocyanate component comprises at least one aromatic polyisocyanate selected from the group consisting of 1,4-phenylene diisocyanate, 2,4- and/or 2,6-toluylene diisocyanate, xylylene diisocyanate, hydrogenated xylylene diisocyanate, tetramethylxylylene diisocyanate, 1,5-naphthylene diisocyanate, diphenylene methane-2,4'- and/or -4,4'-diisocyanate, triphenylmethane-4,4',4"-triisocyanate, bis- and tris-(isocyanatoalkyl)-benzene, -toluene and -xylene, and mixtures thereof.

10. Multi-component resin system according to any of claims 1 to 8, **characterized in that** the isocyanate component comprises at least one aliphatic polyisocyanate selected from the group consisting of hexamethylene diisocyanate (HDI), trimethyl HDI (TMDI), pentane diisocyanate (PDI) 2-methylpentane-1,5-diisocyanate (MPDI), isophorone diisocyanate (IPDI), 1,3- and 1,4-bis(isocyanatomethyl)cyclohexane (H₆XDI), bis(isocyanatomethyl)norbornane (NBDI), 3(4)-isocyanatomethyl-1-methyl-cyclohexyl isocyanate (IMCI) and 4,4'- bis(isocyanatocyclohexyl)methane (H₁₂MDI), and mixtures thereof.

11. Multi-component resin system according to any of the preceding claims, **characterized in that** the total filling level is in a range from 35 to 65 wt.%, based on the total weight of the multi-component resin system.

12. Multi-component resin system according to any of the preceding claims, **characterized in that** the amine which is reactive to isocyanate groups is selected from the group consisting of 4,4'-methylene-bis[N-(1-methylpropyl)phenylamine], an isomer mixture of 6-methyl-2,4-bis(methylthio)phenylene-1,3-diamine and 2-methyl-4,6-bis(methylthio)phenylene-1,3-diamine, 4,4'-methylenebis(2,6-diethylaniline), 4,4'-methylenebis(N-sec-butylcyclohexanamine), 3,3'-diaminodiphenylsulfone, N,N'-di-sec-butyl-p-phenylenediamine and 2,4,6-trimethyl-m-phenylenediamine, and mixtures thereof.

13. Multi-component resin system according to any of the preceding claims, **characterized in that** the multi-component resin system is a two-component resin system.

14. Mortar composition produced by mixing the isocyanate component and the amine component of the multi-component resin system according to any of the preceding claims.

15. Method for chemically fastening construction elements in boreholes, wherein a multi-component resin system according to any of claims 1 to 13 or a mortar composition according to claim 14 is used for the chemical fastening.

16. Use of a molecular sieve in a multi-component resin system based on isocyanate amine adducts for chemical fastening in order to increase the pull-out values of a chemical anchor.

17. Use of a multi-component resin system according to any of claims 1 to 13 or of a mortar composition according to claim 14 for chemically fastening construction elements in mineral substrates.

## Revendications

1. Système de résine à plusieurs composants contenant un composant isocyanate qui comprend au moins un polyisocyanate aliphatique et/ou aromatique comportant une fonctionnalité NCO moyenne de 2 ou plus, et un composant amine qui comprend au moins une amine réactive vis-à-vis des groupes isocyanate, laquelle amine comporte une fonctionnalité NH moyenne de 2 ou plus, à condition que le système de résine à plusieurs composants soit exempt d'esters d'acide polyaspartique, dans lequel le composant isocyanate et/ou le composant amine comprend au moins un matériau de remplissage ainsi qu'au moins un additif rhéologique et le niveau de remplissage total d'une masse de mortier préparée en mélangeant le composant isocyanate et le composant amine se situe dans une plage allant de 30 à 80 % en poids,
**caractérisé en ce que**
le composant isocyanate et/ou le composant amine contient en outre un tamis moléculaire.

2. Système de résine à plusieurs composants selon la revendication 1, **caractérisé en ce que** le tamis moléculaire est une zéolite.

3. Système de résine à plusieurs composants selon la revendication 2, **caractérisé en ce que** la zéolite est choisie dans le groupe constitué de
zéolite A (Na₁₂((AlO₂)₁₂(SiO₂)₁₂) · 27 H₂O ; K₁₂((AlO₂)₁₂(SiO₂)₁₂) · 27 H₂O),
zéolite X (Na₈₆[(AlO₂)₈₆(SiO₂)₁₀₆] · 264 H₂O),
zéolite Y (Na₅₆[(AlO₂)₅₆(SiO₂)₁₃₆] · 250 H₂O),
zéolite L (K₉[(AlO₂)₉(SiO₂)₂₇] · 22 H₂O),
modernite (Na_{8,7}[(AlO₂)_{8,7}(SiO₂)_{39,3}] · 24 H₂O),
zéolite ZSM 5 (Na_{0,3}H_{3,8}[(AlO₂)_{4,1}(SiO₂)_{91,9}]) et
zéolite ZSM 11 (Na_{0,1}H_{1,7}[(AlO₂)_{1,8}(SiO₂)_{94,2}]).

4. Système de résine à plusieurs composants selon l'une des revendications précédentes, **caractérisé en ce que** le tamis moléculaire se présente sous forme de poudre, de granulés ou de pâte.

5. Système de résine à plusieurs composants selon l'une des revendications précédentes, **caractérisé en ce que** le tamis moléculaire est contenu en une quantité de 0,1 à 60 % en poids par rapport au poids total du système de résine à plusieurs composants.

6. Système de résine à plusieurs composants selon l'une des revendications précédentes, **caractérisé en ce que** le composant isocyanate et le composant amine comprennent tous deux l'au moins un matériau de remplissage et l'au moins un additif rhéologique.

7. Système de résine à plusieurs composants selon la revendication 6, **caractérisé en ce que** le niveau de remplissage du composant isocyanate et le niveau de remplissage du composant amine vont de 10 à 70 % en poids, respectivement par rapport au poids total du composant isocyanate ou du composant amine.

8. Système de résine à plusieurs composants selon l'une des revendications précédentes, **caractérisé en ce que** le polyisocyanate et l'amine sont présents dans un rapport quantitatif dans lequel le rapport de la fonctionnalité NCO moyenne du polyisocyanate à la fonctionnalité NH moyenne de l'amine est compris entre 0,3 et 2,0.

9. Système de résine à plusieurs composants selon l'une des revendications précédentes, **caractérisé en ce que** le composant isocyanate comprend au moins un polyisocyanate aromatique choisi dans le groupe constitué de diisocyanate de 1,4-phénylène, diisocyanate de 2,4- et/ou 2,6-toluylène, diisocyanate de xylylène, diisocyanate de xylylène hydrogéné, diisocyanate de tétraméthylxylylène, diisocyanate de 1,5-naphtylène, 2,4'- et/ou -4,4'-diisocyanate de diphénylèneméthane, 4,4',4"-triisocyanate de triphénylméthane, bis- et tris-(isocyanatoalkyl)-benzène, -toluène et -xylène ainsi que des mélanges de ceux-ci.

10. Système de résine à plusieurs composants selon l'une des revendications 1 à 8, **caractérisé en ce que** le composant isocyanate comprend au moins un polyisocyanate aliphatique choisi dans le groupe constitué de le diisocyanate d'hexaméthylène (HDI), triméthyl-HDI (TMDI), diisocyanate de pentane (PDI), 1,5-diisocyanate de 2-méthylpentane (MPDI), diisocyanate d'isophorone (IPDI), 1,3- et 1,4-bis(isocyanatométhyl)cyclohexane (H₆XDI), bis(isocyanatométhyl)norbornane (NBDI), 3(4)-isocyanatométhyl-1-méthyl-cyclohexylisocyanate (IMCI) et 4,4'-bis(iso-cyanatocyclohexyl)méthane (H₁₂MDI) et des mélanges de ceux-ci.

11. Système de résine à plusieurs composants selon l'une des revendications précédentes, **caractérisé en ce que** le niveau de remplissage total se situe dans une plage allant de 35 à 65 % en poids par rapport au poids total du système de résine à plusieurs composants.

12. Système de résine à plusieurs composants selon l'une des revendications précédentes, **caractérisé en ce que** l'amine réactive vis-à-vis des groupes isocyanate est choisie dans le groupe constitué de 4,4'-méthylène-bis[N-(1-méthylpropyl)phénylamine], un mélange d'isomères de 6-méthyl-2,4-bis(méthylthio)phénylène-1,3-diamine et 2-méthyl-4,6-bis(méthylthio)phénylène-1,3-diamine, 4,4'-méthylènebis(2,6-diéthylaniline), 4,4'-méthylènebis(N-sec-butylcyclohexanamine), 3,3'-diaminodiphénylsulfone, N,N'-di-sec-butyl-p-phénylènediamine et 2,4,6-triméthyl-m-phénylènediamine, ainsi que des mélanges de ceux-ci.

13. Système de résine à plusieurs composants selon l'une des revendications précédentes, **caractérisé en ce que** le système de résine à plusieurs composants est un système de résine à deux composants.

14. Masse de mortier préparée en mélangeant le composant isocyanate et le composant amine du système de résine à plusieurs composants selon l'une des revendications précédentes.

15. Procédé permettant la fixation chimique d'éléments de construction dans des trous de forage, dans lequel, pour la fixation chimique, un système de résine à plusieurs composants selon l'une des revendications 1 à 13 ou une masse de mortier selon la revendication 14 est utilisée.

16. Utilisation d'un tamis moléculaire dans un système de résine à plusieurs composants à base de produits d'addition isocyanate-amine pour la fixation chimique en vue de l'augmentation des valeurs d'arrachement d'une cheville chimique.

17. Utilisation d'un système de résine à plusieurs composants selon l'une des revendications 1 à 13 ou d'une masse de mortier selon la revendication 14 pour la fixation chimique d'éléments de construction dans des supports minéraux.
